Europäisches Patentamt

European Patent Office

Office européen des brevets

(19)

(11) Veröffentlichungsnummer: **0 044 391**
**B1**

# (12) EUROPÄISCHE PATENTSCHRIFT

(45) Veröffentlichungstag der Patentschrift:
**24.07.85**

(21) Anmeldenummer: **81104054.2**

(22) Anmeldetag: **27.05.81**

(51) Int. Cl.⁴: **G 01 S 3/44**

(54) **Verfahren zum Nachführen einer Antenne.**

(30) Priorität: **18.07.80 DE 3027234**

(43) Veröffentlichungstag der Anmeldung:
**27.01.82 Patentblatt 82/4**

(45) Bekanntmachung des Hinweises auf die Patenterteilung:
**24.07.85 Patentblatt 85/30**

(84) Benannte Vertragsstaaten:
**AT BE CH DE FR GB IT LI LU NL**

(56) Entgegenhaltungen:
**DE - A - 1 762 532**
**DE - A - 2 743 286**
**GB - A - 2 002 966**
**US - A - 3 842 420**
**US - A - 4 030 099**
**US - A - 4 090 201**

**RESEARCH DISCLOSURE, Nr. 186, Oktober 1979**
**HAVANT HANTS (GB) Nr. 18601: "A smoothed digital**
**system for tracking geostationary sateltes" Seiten 540**
**und 541**

(73) Patentinhaber: **ANT Nachrichtentechnik GmbH,**
**Gerberstrasse 33, D-7150 Backnang (DE)**

(72) Erfinder: **Wollenhaupt, Heinz, Dipl.-Ing., Reutlinger**
**Strasse 16, D-7150 Backnang (DE)**
Erfinder: **Kannowade, Heinz, Dipl.-Ing., Hügelstrasse 8,**
**D-7153 Weissach im Tal (DE)**
Erfinder: **Richter, Joannes, Dipl.-Ing.,**
**Stresemannstrasse 38/1, D-7150 Backnang (DE)**
Erfinder: **Steinert, Wolfgang, Dipl.-Ing., Dresdener**
**Ring 39, D-7150 Backnang (DE)**

(74) Vertreter: **Schickle, Gerhard, Dipl.-Ing. et al, ANT**
**Nachrichtentechnik GmbH Patent- und Lizenzabteilung**
**Gerberstrasse 33, D-7150 Backnang (DE)**

**Beschreibung**

Die Erfindung betrifft ein Verfahren zum Nachführen einer ersten Antenne in das Strahlungsmaximum einer ein Bakensignal aussendenden zweiten Antenne, die in etwa periodisch sich wiederholenden Positionsänderungen unterliegt, wobei das von der ersten Antenne empfangene Bakensignal vor und nach jedem Nachführschritt in Azimut- bzw. Elevationsrichtung gemessen und die mit jedem Nachführschritt auftretende Bakenpegeländerung ermittelt wird, deren Vorzeichen die Richtung für den jeweils folgenden Nachführschritt angibt, und nach dieser Prozedur so viele Nachführschritte vollzogen werden, bis die Antenne auf das Strahlungsmaximum ausgerichtet ist.

Beim Satellitenfunk muss die Antenne der Erdfunkstelle der Satellitenantenne nachgeführt werden, da der Satellit von der Bodenstation aus gesehen seine Lage ändert; und zwar führt der Satellit eine ungefähr periodisch sich wiederholende Bewegung aus. Dabei erfolgt die Bewegung nach einer Funktion, die sich näherungsweise durch die Überlagerung von Parabelabschnitten mit einer Sinusfunktion beschreiben lässt. Die Sinusfunktion resultiert vor allem aus der Inklination des Satelliten; die Periodendauer beträgt deshalb genau 24 Stunden. Der parabelförmige Verlauf kommt durch die Ost-West-Bewegung des Satelliten zustande und hat eine Periodendauer von z. B. 15 Tagen, wenn alle 15 Tage eine Bahnkorrektur des Satelliten vorgenommen wird.

Die Bodenstationsantenne wird in bestimmten Zeitabständen der Satellitenantenne nachgeführt. Ein Nachführverfahren der eingangs beschriebenen Art ist aus der Druckschrift «Research Disclosure», Nr. 186, Oktober 1979, S. 540/541, Art. Nr. 18601 bekannt. Dabei sendet der Satellit ein Bakensignal aus und die Bodenstationsantenne führt schrittweise in Azimut- und Elevationsrichtung ins Strahlungsmaximum. Vor jedem Suchschritt wird von der Bodenstationsantenne der Bakenpegel gemessen und mit dem vor dem vorherigen Suchschritt gemessenen Bakenpegel verglichen. Ist der Bakenpegel durch den vorhergehenden Suchschritt gestiegen, so wird der nächste Suchschritt in die gleiche Richtung durchgeführt. Ist der Bakenpegel gefallen, so wird der nächste Suchschritt in die entgegengesetzte Richtung durchgeführt. Diese Suchprozedur wird so lange fortgeführt, bis die Bodenstationsantenne auf das Strahlungsmaximum der das Bakensignal aussendenden Antenne ausgerichtet ist.

Im Idealfall tritt bei einem Suchschritt direkt im Strahlungsmaximum keine Bakenpegeländerung mehr auf. Ergibt also eine Messung bei einem Suchschritt keine Bakenpegeländerung, so hat die Antenne ihre optimale Ausrichtung erreicht. Treten aber abweichend vom Idealfall Bakenpegelschwankungen auf, so stellt sich selbst bei einem Suchschritt im Strahlungsmaximum eine Bakenpegeländerung ein. Eine Bakenpegeländerung hat bei diesem bekannten Nachführverfahren einen weiteren Suchschritt zur Folge; d. h. die Antenne fährt wieder aus dem Strahlungsmaximum heraus und wird in eine Position gefahren, die neben dem Strahlungsmaximum liegt.

Die Gefahr, dass die Bodenstationsantenne aus der bereits gefundenen Position des Strahlungsmaximums wieder herauswandert, lässt sich dadurch vermindern, dass man nicht erst dann die Suchprozedur abbricht, wenn die Bakenpegeländerung bei einem Suchschritt total verschwindet, sondern schon bei einer unter einer festgesetzten Schwelle liegenden, geringen Bakenpegeländerung. Treten starke Bakenpegelschwankungen aufgrund von atmosphärischen Störungen auf, was gerade im Frequenzbereich von grösser als 10 GHz vorkommt, so findet die Bodenstationsantenne nach dem oben beschriebenen Verfahren nicht mehr mit absoluter Sicherheit das Strahlungsmaximum der Satellitenantenne. Es kann nämlich passieren, dass vor einem Suchschritt ein Bakenpegel gemessen wird, der gerade einen Einbruch erfahren hat. Die Differenz zwischen diesem und dem vor dem letzten Suchschritt gemessenen Bakenpegel ist dann unter Umständen kleiner als die feste Schwelle, was als Kriterium für das Treffen des Strahlungsmaximums angesehen wird, obwohl die Bodenstationsantenne noch weit daneben liegt. Ebenso störend wirkt sich ein vor einem Suchschritt im Bereich des Strahlungsmaximums gemessener plötzlicher Bakenpegelanstieg aus. Es wird eine Pegeldifferenz zu dem zuletzt gemessenen Bakenpegel registriert, die grösser als die Schwelle ist. Obwohl die Bodenstationsantenne sich bereits im Strahlungsmaximum befindet, führt sie in diesem Fall einen weiteren Suchschritt aus und wandert wieder aus dem Strahlungsmaximum heraus.

Die einmal fest vorgegebene Schwelle müsste idealerweise so gewählt werden, dass sie nur im Strahlungsmaximum grösser ist als eine durch einen Suchschritt in diesem Bereich bewirkte Bakenpegeländerung. Bei allen davor liegenden Suchschritten müsste sie kleiner sein als die damit verbundenen Bakenpegeländerungen. Diese Forderungen lassen sich mit einer festen Schwelle kaum erfüllen.

Der Erfindung liegt nun die Aufgabe zugrunde, ein Verfahren zum Nachführen einer ersten Antenne in das Strahlungsmaximum einer ein Bakensignal aussendenden zweiten Antenne, die ungefähr periodisch sich wiederholenden Positionsänderungen unterliegt, anzugeben, das eine sehr zuverlässige und exakte Nachführung der ersten Antenne in das Strahlungsmaximum der zweiten Antenne gewährleistet.

Erfindungsgemäss wird die Aufgabe dadurch gelöst, dass nur dann ein Nachführschritt vollzogen wird, wenn die Bakenpegeländerung vom vorhergehenden Nachführschritt eine Schwelle übersteigt, welche gebildet wird durch die Summe aus der mit einem wählbaren Faktor gewichteten Streuung des Bakenpegels, die vor jedem Nachführschritt aus mehreren Messproben ermittelt wird, und einem fest vorgebbaren Schwellenanteil, wobei die Schwelle nicht kleiner werden darf als die Bakenpegeländerung bei einem Nachführschritt im Bereich des Keulenmaximums.

Aus der oben genannten Druckschrift ist es zwar auch bekannt, die aus mehreren Messproben ermittelte Streuung des Bakenpegels zu überwachen. Ferner ist es hierbei bekannt, die Bakenpegeländerungen mit einer fest vorgegebenen Schwelle zu vergleichen. Übersteigen die Bakenpegeländerungen bzw. die Streuung des Bakenpegels diese Schwelle, so wird jedoch vom Nachführmodus auf Grund von Messungen auf einen Vorhersagemodus umgeschaltet. Es erfolgt also keine Regelung der Schwelle, und das Übersteigen der Schwelle ist nicht das Kriterium für den nächsten Nachführschritt.

Zweckmässige Ausführungen der Erfindung gehen aus den abhängigen Ansprüchen hervor.

Anhand eines Ausführungsbeispiels wird nun die Erfindung näher erläutert.

In Abständen von z. B. einer halben Stunde wird jeweils eine Nachführprozedur gestartet, die die Bodenstationsantenne schrittweise auf das Strahlungsmaximum der Satellitenantenne ausrichtet. Die Bodenstationsantenne bewegt sich dabei abwechselnd in Azimut- und Elevationsrichtung um konstante Winkelbeträge. Die Grösse der Winkelbeträge ergibt sich aus der gleichmässigen Unterteilung der Keulenbreite der das Bakensignal empfangenden Bodenstationsantenne. Begonnen wird eine Nachführprozedur mit einem Suchschritt in die gleiche Richtung wie bei der vorherigen Nachführprozedur vor einer halben Stunde. Welche Nachteile es mit sich bringt, mittels einer festen Schwelle, welche mit der aufgrund des letzten Suchschrittes bewirkten Bakenpegeländerung am Ort der Bodenstationsantenne verglichen wird, zu entscheiden, ob ein weiterer Suchschritt in die gleiche oder entgegengesetzte Richtung durchgeführt werden soll, ist weiter oben bereits dargelegt worden. Man umgeht diese Nachteile, wenn die Schwelle variabel gemacht wird. Die Schwelle soll so variieren, dass sie umso kleiner wird, je mehr die Bodenstationsantenne sich dem Strahlungsmaximum nähert. Dabei soll sie aber gerade noch grösser sein als die Bakenpegeländerung bei einem Suchschritt im Bereich des Strahlungsmaximums. Die Schwelle s setzt sich aus einem wählbaren festen Schwellenanteil $s_o$ und einem variablen Anteil $s_v$ zusammen

$$s = s_o + s_v$$

Der variable Schwellenanteil $s_v$ ist das Produkt aus einem Wichtungsfaktor c und der Streuung $\sigma$ des Bakenpegels, die vor jedem Suchschritt erneut ermittelt wird.

Mit $s_v = c \cdot \sigma$ gilt:
$$s = s_o + c \cdot \sigma$$

Zur Bestimmung der Streuung $\sigma$ werden vor jedem Suchschritt mehrere (ca. 20) Messungen des Bakensignals in äquidistanten Zeitabständen (z. B. 12 s) vorgenommen. Da die Streuung des Bakensignals vom Rand der Strahlungskeule zum Maximum hin abnimmt, verringert sich auch in Abhängigkeit davon die Schwelle, wenn die Bodenstationsantenne sich dem Strahlungsmaximum nähert.

Aus den Messproben des Bakensignals wird der Mittelwert gebildet, und die Differenz aus den beiden Bakensignalmittelwerten vor und nach dem letzten Nachführschritt im Vergleich mit der Schwelle gibt Auskunft darüber, ob ein weiterer Nachführschritt folgen soll. Die Mittelwertbildung des Bakensignals verhindert, dass die Nachführung durch einzelne Pegelschwankungen verfälscht wird. Um die störende Wirkung von sehr starken Pegeleinbrüchen oder -spitzen auszuschliessen, wird das Bakensignal, bevor die Messproben entnommen werden, über ein Filter zur Glättung des Pegels geleitet. Sollten die Pegelschwankungen zu gross sein, wird die Nachführprozedur unterbrochen.

Mit diesem erfindungsgemässen Nachführverfahren erreicht man bei normalen Witterungsbedingungen eine sehr hohe Ausrichtgenauigkeit.

Die Azimut- und Elevationspositionen der Bodenstationsantenne am Ende jeder Suchprozedur werden über einen Zeitraum von ein bis zwei Tagen gespeichert. Für den Fall, dass das Bakensignal, die Empfangs- oder Messeinrichtung für das Bakensignal ausfällt, wird der Nachführbetrieb aufrechterhalten mit Hilfe der gespeicherten Antennenpositionsdaten. Die Antenne wird in eine Position gefahren, wie sie durch die vor 24 Stunden abgespeicherten Daten festgelegt ist. Das Zurückgreifen auf vorausgehende Positionsdaten ist deshalb möglich, weil der Satellit, wie oben bereits beschrieben, eine ungefähr periodische Bewegung durchführt. Man kann diesen redundanten Betrieb für ein bis zwei Tage laufen lassen. Es dürfen in dieser Zeit allerdings keine Satellitenbahnkorrekturen vorgenommen werden.

Die Berechnung der Antennenpositionsdaten aus den Messwerten des Bakensignals und das Abspeichern der Daten übernimmt ein Digitalrechner.

**Patentansprüche**

1. Verfahren zum Nachführen einer ersten Antenne in das Strahlungsmaximum einer ein Bakensignal aussendenden zweiten Antenne, die in etwa periodisch sich wiederholenden Positionsänderungen unterliegt, wobei das von der ersten Antenne empfangene Bakensignal vor und nach jedem Nachführschritt in Azimut- bzw. Elevationsrichtung gemessen und die mit jedem Nachführschritt auftretende Bakenpegeländerung ermittelt wird, deren Vorzeichen die Richtung für den jeweils folgenden Nachführschritt angibt, und nach dieser Prozedur so viele Nachführschritte vollzogen werden, bis die Antenne auf das Strahlungsmaximum ausgerichtet ist, dadurch gekennzeichnet, dass nur dann ein Nachführschritt vollzogen wird, wenn die Bakenpegeländerung vom vorhergehenden Nachführschritt eine Schwelle (s) übersteigt, welche gebildet wird durch die Summe aus der mit einem wählbaren Faktor (c) gewichteten Streuung ($\sigma$) des Bakenpegels, die vor jedem Nachführschritt aus mehreren Messproben ermittelt wird, und einem fest vorgebbaren Schwellenanteil (s$_o$) wobei die Schwelle nicht kleiner werden darf als die Bakenpegeländerung bei einem Nachführschritt im Bereich des Keulenmaximums.

2. Verfahren nach Anspruch 1, dadurch gekennzeichnet, dass jedesmal nach Auffinden des Strahlungsmaximums die Positionsdaten der ersten Antenne abgespeichert werden, nach denen die Antenne bei Ausfall des Bakensignals oder der Empfangs- bzw. Messeinrichtungen für das Bakensignal nachgeführt wird.

3. Verfahren nach Anspruch 1, dadurch gekennzeichnet, dass bevor die Messproben vom Bakensignal zur Ermittlung der Streuung entnommen werden, das Bakensignal über ein Filter gegeben wird zur Glättung eventuell auftretender kurzzeitiger starker Bakensignalschwankungen.

4. Verfahren nach Anspruch 1, dadurch gekennzeichnet, dass die Nachführprozedur unterbrochen wird, wenn aufgrund sehr starker Bakensignalschwankungen eine sehr grosse Streuung gemessen wird.

## Claims

1. Method for the tracking of a first aerial into the radiation maximum of a second aerial which emits a beacon signal and is subject to about periodically repeating positional changes, wherein the beacon signal received by the first aerial is measured in azimuth or elevation direction before and after each tracking step and the beacon level change occuring on each tracking step is determined and by its sign indicates the direction for the respectively following tracking step and as many tracking steps are executed according to this procedure until the aerial is aligned to the radiation maximum, characterised thereby, that a tracking step is executed only when the beacon level change from the preceding tracking step exceeds a threshold (s), which is formed by the sum of the scatter ($\sigma$) – weighted by a selectable factor (c) – of the beacon level determined from several measurement samples before each tracking step and of a fixedly predeterminable threshold component (s$_o$), wherein the threshold may not become smaller than the beacon level change for a tracking step in the region of the lobe maximum.

2. Method according to claim 1, characterised thereby, that the positional data of the first aerial are put into storage each time after finding the radiation maximum, according to which data the aerial is tracked in the case of failure of the beacon signal or of the receiving or measuring equipments for the beacon signal.

3. Method according to claim 1, characterised thereby, that before the measurement samples are taken of the beacon signal for the determination of the scatter, the beacon signal is put through a filter for the smoothing of possibly occuring, strong short-term beacon signal fluctuations.

4. Method according to claim 1, characterised thereby, that the tracking procedure is interrupted when a very great scatter is measured by reason of very strong beacon signal fluctuations.

## Revendications

1. Procédé de pointage d'une première antenne sur le maximum de rayonnement d'une seconde antenne émettant un signal de balise et présentant des variations de position sensiblement périodiques, avec mesure du signal de balise reçu par la première antenne suivant les directions d'azimut et de site avant et après chaque pas de pointage, détermination de la variation de niveau de la balise apparaissant à chaque pas de pointage et dont le signe indique le sens du pas de pointage suivant, et exécution selon cette procédure de pas de pointage jusqu'à ce que l'antenne soit calée sur le maximum de rayonnement, ledit procédé étant caractérisé en ce qu'un pas de pointage est effectué uniquement quand la variation de niveau de la balise due au pas de pointage précédent dépasse un seuil (s) formé par la somme, pondérée par un coefficient ajustable (c), de la dispersion ($\sigma$) du niveau de la balise, qui est déterminée à l'aide de plusieurs échantillons avant chaque pas de pointage, et d'une composante prédéterminée fixe (s$_o$) du seuil, ce dernier ne devant pas devenir inférieur à la variation de niveau de la balise lors d'un pas de pointage au voisinage du maximum du lobe.

2. Procédé selon revendication 1, caractérisé en ce que chaque fois que le maximum de rayonnement est atteint, les caractéristiques de position de la première antenne sont mémorisées et servent au pointage de l'antenne en cas de défaillance du signal de balise ou des dispositifs de réception ou de mesure.

3. Procédé selon revendication 1, caractérisé en ce qu'avant le prélèvement des échantillons du signal de balise pour détermination de la dispersion, le signal de balise est dirigé dans un filtre pour le lissage d'éventuelles fluctuations brèves et intenses dudit signal.

4. Procédé selon revendication 1, caractérisé en ce que la procédure de pointage est interrompue quand une très forte dispersion est mesurée par suite de fluctuations très intenses du signal de balise.